# EUROPEAN PATENT APPLICATION

(11) **EP 1 271 978 A2**
(43) Date of publication of application: **02.01.2003**
(21) Application number: 02014112.3
(22) Date of filing: 24.06.2002
(51) Int. Cl.: H04Q 7/34

(54) **CDMA system and method of detecting faulty mobile device**

(30) Priority: 28.06.2001 JP 2001196136
(71) Applicant: NEC CORPORATION, Tokyo (JP)
(72) Inventor: Tanoue, Katsumi, Minato-ku, Tokyo (JP)
(74) Representative: VOSSIUS & PARTNER

(57) **Abstract**

Disclosed is a CDMA system and a method of detecting a faulty mobile device in which interference with communication of other mobile devices can be decreased by detecting the existence of a mobile device with a faulty receiver system through monitoring the transmission power of the outgoing signal transmitted from a base station to the mobile device and preventing unnecessary increase in the outgoing transmission power due to an increase request of the outgoing transmission power from the faulty mobile device. The base station reports to a base station controller the transmission power of the outgoing signal transmitted to the mobile device. The base station controller judges the mobile device as faulty when the transmission power of the outgoing signal exceeds the predetermined threshold value for a predetermined period of time, and registers the faulty mobile device to the mobile device managing database. The base station controller sets a desired communication quality for the mobile device lower than the regular quality at the time of an access request. When a request for increase in the outgoing transmission power continues even after degrading the desired communication quality of the mobile device, the base station controller rejects an access request from the faulty mobile device.

## Description

The present invention relates to a CDMA system and a method of detecting a faulty mobile device, more specifically, to a CDMA system and a method of detecting a faulty mobile device in which a fault in a mobile device is detected by monitoring the transmission power of an outgoing signal transmitted from a base station to a mobile device and preventing an unnecessary increase in the outgoing transmission power due to an increase request of the outgoing transmission power from a faulty mobile device.

In a CDMA system, a mobile device and a base station execute a high-speed bidirectional transmission power control at all times so that the transmission power supplied from the base station to the mobile device becomes the most suitable satisfying a predetermined receiving quality.

JP-A- 2000-91982 discloses a technique for preventing deterioration of radio communication quality in a CDMA mobile radio communication system, in which output information of a mobile device is monitored continuously and, if a faulty mobile device transmitting an abnormal output is detected, the transmission output of the mobile device is coercively stopped.

However, if there exists in a CDMA system a mobile device in which a receiver system is faulty or the performance of the receiver system is deteriorated, the mobile device cannot maintain a predetermined receiving quality. Accordingly, the mobile device keeps requesting to increase the transmission power of the outgoing signal from the base station. As a result, the transmission power of the outgoing signal from the base station to the mobile device is unnecessarily increased. Therefore, the electric power supplied from the base station to the faulty mobile device becomes interference wave for other mobile devices resulting in a bad influence on communication of other mobile devices.

The present invention has been designed to overcome the foregoing problems. An object of the present invention is to provide a CDMA system and a method of detecting a faulty mobile device in which interfering with communication of other mobile devices is to be reduced by detecting a mobile device with a faulty receiver system and controlling not to increase the transmission power of the outgoing signal to the mobile device.

A CDMA system for solving aforementioned problems comprises: a mobile device, a base station performing radio communication with the mobile device, a base station controller for performing central control on a part of access function of the base station, and a mobile device managing database connected to the base station controller. The mobile device comprises a transmission power change request unit for requesting a change of the transmission power of the base station to the base station so that a current receiving quality satisfies a desired receiving quality after comparing a desired receiving quality class supplied from the base station to the current receiving quality. The base station comprises a transmission power control unit for changing transmission power of an outgoing signal transmitted from the base station to the mobile device according to a transmission power change request supplied from the mobile device, and a transmission power information supply unit for supplying information about the transmission power of the outgoing signal to the base station controller. The base station controller comprises a faulty mobile device detection unit for judging whether or not the mobile device is faulty based on the fact that the transmission power of the outgoing signal transmitted from the base station to the mobile device exceeds the predetermined threshold value for a predetermined period of time, a faulty device registration request unit for supplying a faulty device registration request to the mobile device managing database to register a mobile device judged as faulty, and a desired receiving quality change instruction unit for giving an instruction to degrade a desired receiving quality class of a mobile device or for supplying a message to reject an access request to the mobile device in the case where, upon receiving the access request from the mobile device, the mobile device is found to be registered as faulty after searching the mobile terminal managing database.

The mobile device requests an increase in the transmission power to the base station when a receiving quality of outgoing signal from the base station does not satisfy the desired quality. The base station increases the transmission power of the outgoing signal upon receiving an increase request of the transmission power from the mobile device. The base station supplies (transmits) information about the transmission power of the outgoing signal to the base station controller. The base station controller monitors the information about the transmission power of the outgoing signal supplied (transmitted) from the base station. When the transmission power of the outgoing signal continues to be at a predetermined level or higher, the base station controller judges the receiver system of the mobile device to be faulty and registers the mobile device to the mobile device managing database. Upon receiving an access request from the mobile device judged as faulty (the mobile device registered in the mobile device managing database), the base station controller gives an instruction to degrade the desired receiving class to the mobile device via the base station. If the mobile device can satisfy the receiving quality of the degraded desired receiving class by degrading the desired receiving class of the mobile device, there will be no increase request of the transmission power from the mobile device to the base station. As a result, unnecessary increase in the transmission power supplied from the base station to the mobile device judged as faulty is prevented and interference with the other mobile devices can be reduced. Furthermore, when the transmission power from the base station is unnecessarily increased after degrading the desired receiving class of the mobile device, the terminal controller rejects an access request from the mobile device. Thereby, interfering with other mobile device is prevented.

The mobile device managing database checks whether or not the mobile device judged as faulty has already been registered when the faulty device registration request is supplied and, registers a fault class as a first rank when the terminal has not been registered, registers a fault class as a second rank when the fault class of the mobile device has already been registered as a first rank, and registers a fault class as a third rank when the fault class of the mobile device has already been registered as a second rank. The desired receiving quality change instruction unit of the base station controller searches the mobile device managing database to obtain the fault class of the mobile device upon receiving an access request from the mobile device and, gives an instruction to the base station to set a desired receiving quality one rank lower than the regular state when the fault class is a first rank, gives an instruction to the base station to set a desired receiving quality two ranks lower than the regular state when the fault class is a second rank, and supplies a message to reject an access request to the base station when the fault class is a third rank. The base station supplies (transmits) a desired receiving quality class to the mobile device according to the instruction supplied (transmitted) from the base station controller side.

Thereby, when the receiver system of the mobile device continues to be faulty, the desired receiving quality of the mobile device can be degraded taking steps and the access request from the mobile device judged as faulty can be rejected at last.

In a CDMA system according to the invention, when a mobile device is judged as faulty by the base station controller, the base station controller gives an instruction to the base station to fix the transmission power of outgoing signal supplied from the base station to the mobile device to a predetermined value. Thereby, the base station controller can stop control of the transmission power of the mobile device at the point where the mobile device is judged as faulty and fix the transmission power of outgoing signal to the faulty mobile device to an extent of the value where there is no interference with communication of the other mobile devices.

In a method of detecting a faulty mobile device according to the invention, monitoring the transmission power of outgoing signal transmitted from the base station to the mobile device, and judges the mobile device as faulty when the transmission power of the outgoing signal exceeds the predetermined threshold value for a predetermined period of time.

In other words, a fault in a mobile device can be detected on the base station side or the base station controller side by monitoring the transmission power of outgoing signal, since the mobile device requests an increase in the transmission power to the base station when its receiver system is faulty being unable to satisfy the receiving quality.

The base station controller and the like register the mobile device judged as faulty to the mobile device managing database and gives an instruction to the mobile device judged as faulty to degrade its desired receiver quality class at the time of an access request from the mobile device judged as faulty. Thereby, an increase request of the outgoing transmission power by the mobile device judged as faulty to the base station can be suppressed.

Furthermore, when there is still an increase request of outgoing transmission power supplied from the mobile device even after the base station controller and the like have given an instruction to the mobile device judged as faulty to degrade a desired receiving quality class, the base station controller and the like may reject an access request from the mobile device judged as faulty.

When the base station controller and the like detect a fault in a mobile device, the transmission power of outgoing signal may be fixed to a predetermined amount of power. Thereby, the base station controller and the like can stop control of the transmission power at the point where the mobile device is judged as faulty and fix the transmission power of outgoing signal to the faulty mobile device to an extent where there is no interfering with communication of the other mobile devices.

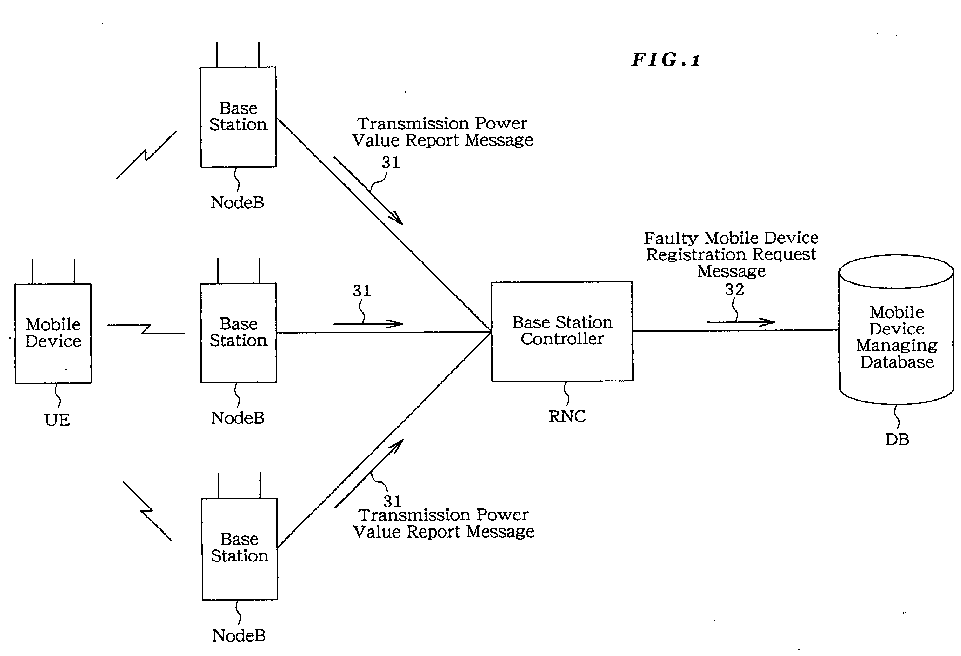

In the followings, an embodiment of the invention will be described by referring to accompanied drawings. FIG. 1
FIG. 1 is an illustration for describing a method of detecting a faulty mobile device according to the invention;
FIG. 2 is a block diagram between a mobile device and a base station controller in a CDMA system according to the invention;
FIG. 3 is a block diagram between a base station controller and a mobile device managing database in a CDMA system according to the invention;
FIG. 4 is an illustration showing a method of transmitting/receiving data between a base station controller and a mobile device managing database;
FIG. 5 is an illustration showing the operation of a base station controller at the time of access; and
FIG. 6 is an illustration showing a supply format of outgoing transmission power information in another embodiment.

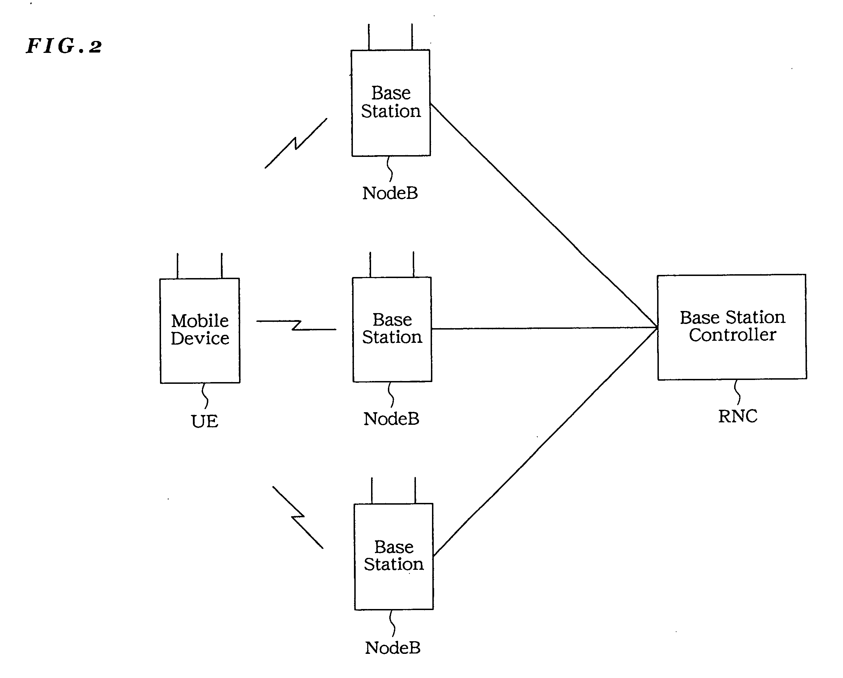

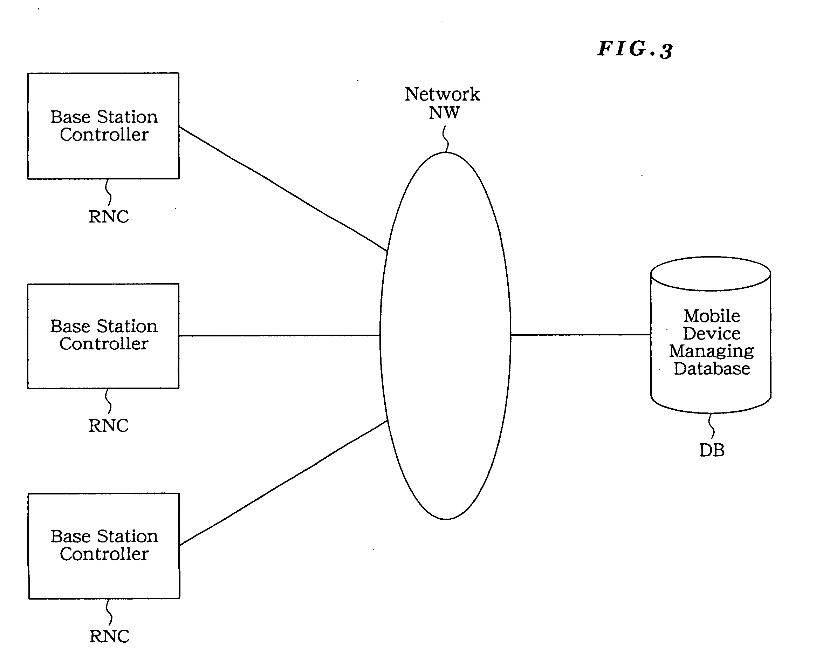

A CDMA system according to the invention, as shown in FIG. 2, comprises a mobile device UE, a plurality of base stations (radio base station devices) NoDeB and a radio base station controller RNC and, as shown in FIG. 3, a mobile device managing database DB connected to a plurality of the radio base station controllers RNC via a network NW.

The CDMA system according to the invention, as shown in FIG. 2, is formed so that communication between the mobile device UE and the base station controller RNC can be performed via a plurality of the base stations NoDeB. Synthesizing/distributing the outgoing signals and incoming signals are performed in the mobile device UE and the base station controller RNC. A plurality of paths between the mobile device UE and the base station controller are called branches.

At the time of starting communication between the mobile device UE and the base station controller RNC, the base station controller RNC sets to the base station the permissible range of transmission power (the maximum transmission power, the minimum transmission power) to be transmitted to the mobile device UE. The permissible range of transmission power (the maximum transmission power, the minimum transmission power) is set according to the desired quality of services requested to the mobile device UE. The desired quality is given as, for example, bit error rate, block error rate or the like.

The mobile device UE comprises a transmission power change request unit for requesting a change of the transmission power to the base stations NoDeB so that the current receiving quality satisfies the desired quality after comparing the desired receiving quality class supplied from the base stations NoDeB to the current receiving quality. The mobile device UE calculates the current quality from the receiving signal (outgoing signal) from the base stations NoDeB and compares it to the given desired quality. Based on the comparison, the mobile device UE transmits a request to decrease the transmission power by one rank (for example, 1 dB) to the base stations NoDeB when the receiving quality is higher than the desired quality, and transmits a request to increase the transmission power by one rank (for example, 1 dB) to the base stations NoDeB when the receiving quality is lower than the desired quality.

The function of the mobile device, which adjusts the transmission power as described, is called a high-speed transmission power control. The high-speed transmission control is performed by a unit of slot in which 1 CDMA radio frame is further divided into a plurality of time slots. The description has been made in regards to the case of controlling outgoing transmission power, however, the similar control is also performed for the incoming transmission power from the mobile device UE to the base stations NoDeB. Since the object of the invention is to suppress the interference wave due to an increase in the outgoing transmission power, description regarding the incoming transmission power will be omitted.

The base station NoDeB comprises a transmission power control unit for changing the transmission power of the outgoing signal transmitted from the base station NoDeB to the mobile device UE according to the transmission power change request supplied from the mobile device, and a transmission power information supply unit for supplying information about the transmission power of outgoing signal to the base station controller RNC.

The base station controller RNC comprises a faulty mobile device detection unit for judging whether or not the mobile device UE is faulty based on the fact that the transmission power of the outgoing signal exceeds the predetermined threshold value for a predetermined period of time, a faulty device registration request unit for supplying a faulty device registration request to the mobile device managing database DB to register a mobile device judged as faulty thereto, and a desired receiving quality change instruction unit for giving an instruction to degrade a desired receiving quality class of a mobile device UE or for supplying a message to reject an access request to the mobile device UE in the case where, upon receiving the access request from the mobile device UE, the mobile device UE is found to be registered as faulty by searching the mobile device managing database DB.

The mobile device managing database DB checks whether or not the mobile device UE judged as faulty has been registered when the faulty device registration request is supplied and, registers a fault class as a first rank (Minor) when the mobile device UE has not been registered, registers a fault class as a second rank (Major) when the fault class of the mobile device UE has already been registered as a first rank, and registers a fault class as a third rank (Critical) when the fault class of the mobile device UE has already been registered as a second rank.

The base station controller RNC, when communicating with the mobile device UE, collects the values of the transmission power from each of the base stations NoDeB to the mobile device UE one by one and compares the values to the permissible range of the transmission power set for the base stations NoDeB. When the outgoing transmission power from all the base stations NoDeB forming branches to a specific mobile device exceeds the threshold value, the base station controller RNC requests to the mobile device managing database DB to put the mobile device UE on a list (black-list) as a faulty device in the mobile device managing database DB.

The mobile device managing database DB calculates, for example, three ranks (Minor, Major, Critical) of fault classes based on the number of requests for adding faulty mobile device from the base station controller RNC, and supplies the information to each base station controller RNC in the network NW. The base station controller RNC judges whether or not the mobile device is registered in the mobile device managing database DB at the time of the access request from the mobile device UE and, if registered, supplies to the mobile device UE the desired quality being degraded by a certain rank according to the fault class.

In the case where there is no decrease in the transmission power supplied from the base stations NoDeB to the mobile device UE even after degrading the desired quality by repeating the above-mentioned operation, the fault class of the mobile device UE is increased between the mobile device managing database DB and the base station controller RNC. When the fault class reaches the third rank (Critical), the base stations NoDeB (base station controller RNC) reject the access request from the mobile device UE. Thereby, system failure due to the increase in interference wave can be prevented.

Now, the operation of the embodiment will be described in detail. In a CDMA system shown in FIG. 2, the radio sections between the mobile device UE and the base stations NoDeB are connected via W-CDMA radio interface, and the cabled sections between the base stations NoDeB and the base station controller RNC are connected via ATM-based W-CDMA cabled interface.

FIG. 1 shows a method of detecting a faulty mobile device in the base station controller RNC. As shown in FIG. 1, in the state where the mobile device UE and the base stations NoDeB are connected via a plurality of branches, the base station NoDeB at each branch reports the value of outgoing transmission power to the mobile device UE to the base station controller RNC at regular intervals by an outgoing transmission power value report message 31.

The base station controller RNC compares the value of the outgoing transmission power received from each base station NoDeB to the permissible range of the transmission power (the maximum transmission power, the minimum transmission power) set for each base station NoDeB at the time of establishing the communication manner between the mobile device UE. Then, in all the branches of the base stations NoDeB, when the outgoing transmission power reaches a certain percentage or more for a certain period of time, the base station controller RNC judges the mobile device UE to be a faulty mobile device, and transmits a faulty mobile device registration request message 32 to the mobile device managing database DB.

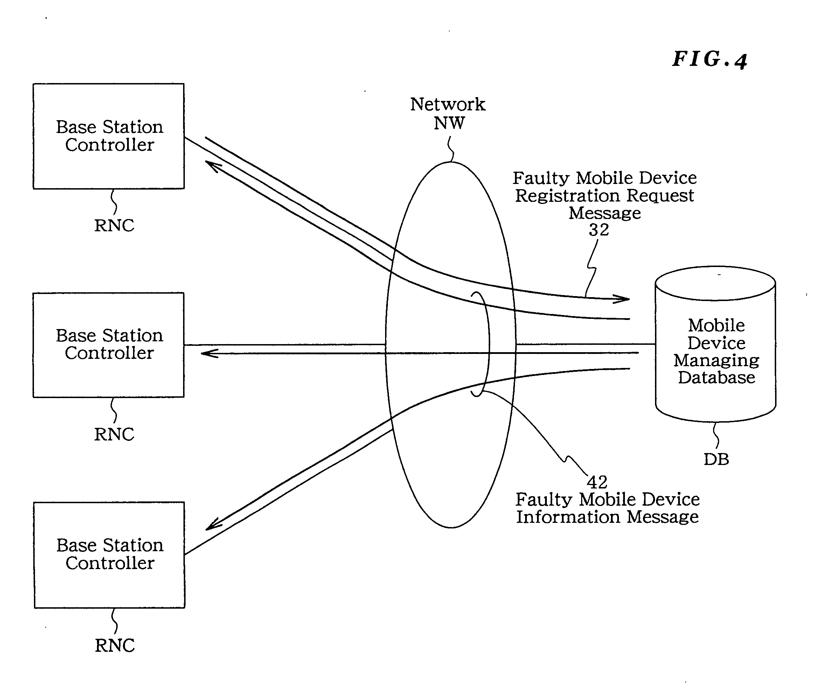

FIG. 4 shows a method of transmitting/receiving data between the base station controller RNC and the mobile device managing database DB. The mobile device managing database DB is connected to a plurality of the base station controllers RNC via the network NW. Upon receiving the mobile device registration request message 32 transmitted from the base station controllers RNC, the mobile device managing database DB first judges whether or not the target mobile device is registered on the faulty mobile device list in the mobile device managing database DB. If not registered, the mobile device managing database DB registers the mobile device UE on the faulty mobile device list and sets the fault class to "Minor". If the mobile device UE is registered, the mobile device managing database DB updates the fault class by one rank. The ranks herein refer to as "Minor", "Major" and "Critical". The case where the fault class "Minor" turns to "Major" after the faulty mobile device registration request is referred to as being updated by one rank. The updated fault class information is supplied by the faulty mobile device information message 42 from the mobile device managing database DB to all the base station controllers RNC in the same group, that is, the subordinate. The faulty mobile device information message 42 contains the fault class information and the search information of the mobile device UE. The search information of the mobile device UE is, for example, the individual product number which each mobile device has.

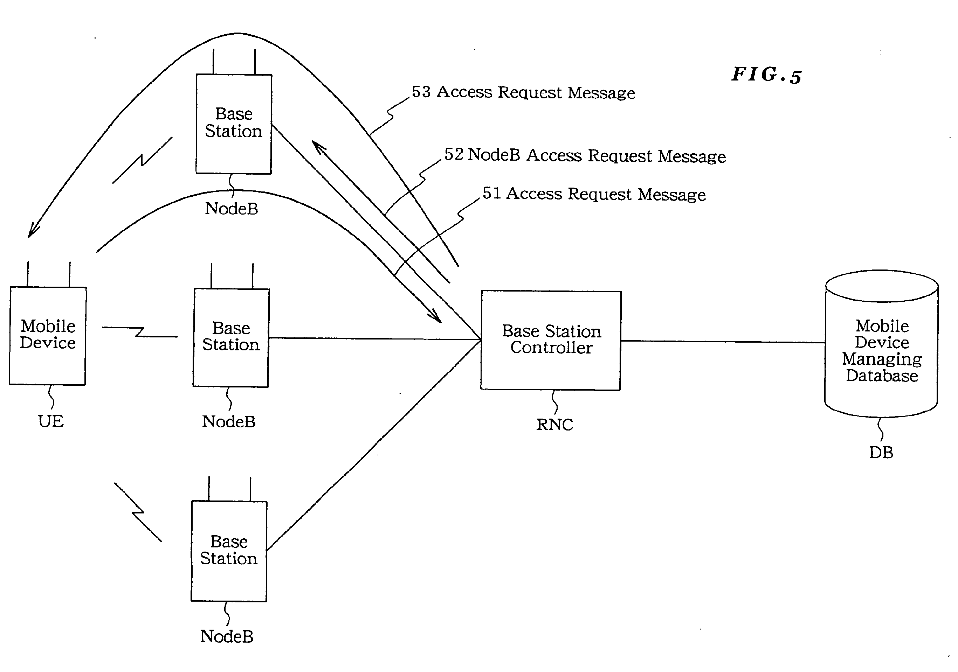

FIG. 5 is for describing the operation of the base station controller RNC when the mobile device UE requests access to the base station controller RNC. In the followings, a case of transmission from the mobile device UE will be simply described as an example. The connection sequence of a regular mobile device, that is, the mobile device which is not faulty, is as follows. The mobile device UE, by off-hook detection (detecting the state where the handset is off the hook), transmits an access request message 51 to the base station controller RNC via the base stations NoDeB. The base station controller RNC upon receiving the access request message 51 calculates the permissible range of the outgoing transmission power to the mobile device UE and the outgoing desired quality. Then the base station controller RNC supplies an NoDeB access request message 53 showing the permissible range of the outgoing transmission power to the base stations NoDeB and supplies an access response message 52 showing the outgoing desired quality to the mobile device UE.

Next, the access sequence of the faulty mobile device will be described. The mobile device UE, by off-hook detection, transmits an access request message 51 to the base station controller RNC via the base stations NoDeB. The base station controller RNC upon receiving the access request message 51 searches whether or not the mobile device is contained in the faulty mobile device information supplied from the mobile device managing database DB based on the mobile device search information contained in the access request message 51 from the mobile device UE. Based on the search result, when the mobile device UE is contained in the faulty mobile device information, the base station controller RNC further performs the following processing according to the assigned fault class which has been registered.

### (1) When the fault class is "Minor"

As the desired quality class set for the mobile device UE, an access response message 52 degraded by one rank from a regular set value is transmitted to the mobile device UE.

### (2) When the fault class is "Major"

As the desired quality class set for the mobile device UE, an access response message 52 degraded by two ranks from a regular set value is transmitted to the mobile device UE.

### (3) When the fault class is "Critical"

An access request from the mobile device UE is rejected. That is, an access request rejection message is transmitted to the mobile device UE.

Each of the three ranks of the desired qualities (the regular value, the value degraded by one rank, the value degraded by two ranks) mentioned above is to be set in the base station controller RNC in advance.

As described, by degrading the desired quality class of the faulty mobile device UE, an increase in the outgoing transmission power from the base stations NoDeB to the mobile device UE can be prevented thereby enabling suppression of the interference wave level to other mobile devices.

A process of recovering a mobile device once being detected as a faulty mobile device is as follows.

### (1) Recovering from "Minor" to the regular state, from "Major" to "Minor"

The base station controller RNC compares the value of the outgoing transmission power received from each base station NoDeB to the permissible range of the transmission power '(the maximum transmission power, the minimum transmission power) set for each base station NoDeB at the time of establishing the communication manner between the mobile device UE. In the case where the outgoing transmission power keeps a certain percentage of the maximum transmission power or less for a certain period of time in any branches of the base stations NoDeB, the base station controller RNC degrades the fault class information of the mobile device UE by one rank and reports it to the mobile device managing database DB.

### (2) Recovering from "Critical" to "Major"

At the point where the fault class of the mobile device UE registered in the mobile device managing database DB becomes "Critical", the mobile device managing database DB starts a timer counting a certain period of time. When the timer runs out, the state of the mobile device UE is recovered to be "Major".

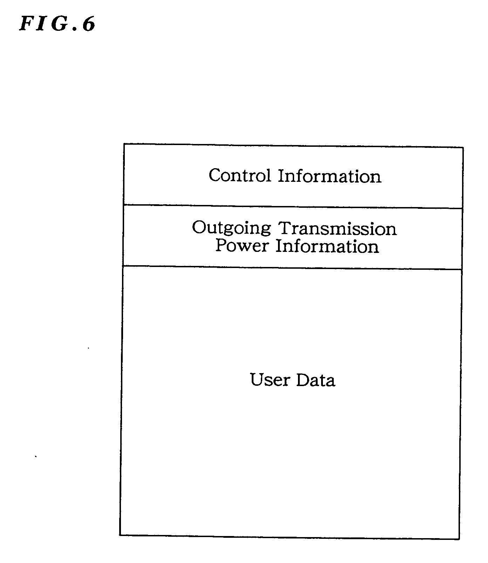

FIG. 1 shows an example where the base stations NoDeB transmit information about the transmission power to the base station controller RNC by supplying the transmission power value report message 31 from the base stations NoDeB to the base station controller RNC. However, as shown in a format in FIG. 6, by attaching the outgoing transmission power value to the user signal supplied from the base stations NoDeB to the base station controller RNC, it becomes possible to report the outgoing transmission power value to the base station controller RNC at all times.

Also, in the embodiment, a configuration and a method have been described in which, the base station controller RNC registers the faulty mobile device UE in the mobile device managing database DB when detecting a fault in a mobile device UE based on the outgoing transmission power, and degrades the desired receiving quality class of the mobile device UE when there is an access request from the faulty mobile device thereafter, so that there is no more request supplied from the mobile device UE to the base stations NoDeB. However, when the base station controller RNC transmits the faulty mobile device registration request message 31 to the mobile device managing database DB, the outgoing transmission power value change instruction may be transmitted to each branch of the base stations NoDeB at the same time. The outgoing transmission power value change instruction herein is for appointing the absolute value of the outgoing transmission power (the outgoing transmission power value) for each base station NoDeB and for instructing termination of the outgoing transmission power control. Thereby, an increase in the interference wave by the faulty mobile device can be prevented instantaneously.

Furthermore, in the embodiment, a configuration has been described in which information about the transmission power value of the outgoing signal is supplied from the base stations NoDeB to the base station controller RNC and the transmission power value of the outgoing signal is monitored on the base station controller RNC side. However, it may have a configuration in which the transmission power of the outgoing signal is monitored on the base station NoDeB side, and the base stations NoDeB notify the base station controller RNC when the transmission power of the outgoing signal exceeds the threshold value for a predetermined period of time. Thereby, the amount of data supplied from the base stations NoDeB to the base station controller RNC can be decreased.

As described, according to a CDMA system and a method of detecting a faulty mobile device, when there is a faulty mobile device in a CDMA system, an increase in the interference wave due to the continuous requests from the mobile device to the base station to increase the outgoing transmission power can be suppressed since the faulty mobile device is classified into ranks and communication is performed with a desired quality class according to each rank. Furthermore, by rejecting communication with a mobile device being ranked in the highest faulty rank, a bad influence on communication of other mobile devices can be prevented.

The invention may be embodied in other specific forms without departing from the spirit or essential characteristic thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

The entire disclosure of Japanese Patent Application No. 2001-196136 (Filed on June 28, 2001) including specification, claims, drawings and summary are incorporated herein by reference in its entirety.

## Claims

1. A CDMA system comprising: a mobile device, a base station for performing radio communication with the mobile device, a base station controller for performing central control on a part of access function of the base station, and a mobile device managing database connected to the base station controller, wherein:
the mobile device comprises a transmission power change request unit for requesting a change of the transmission power of the base station to the base station so that a current receiving quality satisfies a desired receiving quality after comparing a desired receiving quality class supplied from the base station to the current receiving quality;
the base station comprises a transmission power control unit for changing transmission power of an outgoing signal transmitted from the base station to the mobile device according to a transmission power change request supplied from the mobile device, and a transmission power information supply unit for supplying information about the transmission power of the outgoing signal to the base station controller; and
the base station controller comprises a faulty mobile device detection unit for judging whether or not the mobile device is faulty based on the fact that the transmission power of the outgoing signal transmitted from the base station to the mobile device exceeds the predetermined threshold value for a predetermined period of time, a faulty device registration request unit for supplying a faulty device registration request to the mobile device managing database to register a mobile device judged as faulty, and a desired receiving quality change instruction unit for giving an instruction to degrade a desired receiving quality class of a mobile device or for supplying a message to reject an access request to the mobile device in the case where, upon receiving the access request from the mobile device, the mobile device is found to be registered as faulty after searching the mobile terminal managing database.

2. The CDMA system as claimed claim 1, wherein the mobile device managing database checks whether or not the mobile device judged as faulty has already been registered when the faulty device registration request is supplied and, registers a fault class as a first rank when the terminal has not'been registered, registers a fault class as a second rank when the fault class of the mobile device has already been registered as a first rank, and registers a fault class as a third rank when the fault class of the mobile device has already been registered as a second rank.

3. The CDMA system as claimed in claim 2, wherein: the desired receiving quality change instruction unit of the base station controller searches the mobile device managing database to obtain the fault class of the mobile device upon receiving an access request from the mobile device and, gives an instruction to the base station to set a desired receiving quality class one rank lower than the regular state when the fault class is a first rank, gives an instruction to the base station to set a desired receiving quality class two ranks lower than the regular state when the fault class is a second rank, and supplies a message to reject an access request to the base station when the fault class is a third rank; and
the base station supplies a desired receiving quality class to the mobile device according to the instruction from the base station controller side.

4. A CDMA system comprising: a mobile device, a base station performing radio communication with the mobile device, and a base station controller for performing central control on a part of access function of the base station, wherein:
the base station comprises: a transmission power control unit for changing transmission power of an outgoing signal transmitted from the base station to the mobile device according to a transmission power change request supplied from the mobile device while fixing the transmission power of the outgoing signal to the instructed value when an instruction is given from the base station controller to fix the transmission power of the outgoing signal to a predetermined value, and a transmission power information supply unit for supplying information about the transmission power of the outgoing signal to the base station controller; and
the base station controller comprises a faulty mobile device detection unit for judging whether or not the mobile device is faulty based on the fact that the transmission power of the outgoing signal transmitted from the base station to the mobile device exceeds the predetermined threshold value for a predetermined period of time, and a transmission power change instruction unit for giving an instruction to the base station to fix the transmission power of the outgoing signal to a predetermined value when the mobile device is judged as faulty by the faulty mobile device detection unit.

5. A method of detecting a faulty mobile device comprising the steps of:
monitoring transmission power of a outgoing signal transmitted from a base station to a mobile device; and
judging the mobile device to be faulty based on the fact that the transmission power of the outgoing signal exceeds the predetermined threshold value for a predetermined period of time.

6. A method of detecting a faulty mobile device comprising the steps of:
monitoring transmission power of an outgoing signal transmitted from a base station to a mobile device; and
judging the mobile device to be faulty based on the fact that the transmission power of the outgoing signal exceeds the predetermined threshold value for a predetermined period of time, while registering the mobile device judged as faulty to a mobile device managing database and giving an instruction to the mobile device judged as faulty to degrade a desired receiving quality class of the mobile device judged as faulty at the time of receiving an access request from the mobile device judged as faulty.

7. The method of detecting a faulty mobile device as claimed in claim 6, wherein the method is to reject an access request from the mobile device judged as faulty when there is still an increase request of outgoing transmission power supplied from the mobile device even after giving an instruction to the mobile device judged as faulty to degrade a desired receiving quality class.

8. A method of detecting a faulty mobile device comprising the steps of:
monitoring transmission power of an outgoing signal transmitted from a base station to a mobile device; and
judging the mobile device to be faulty based on the fact that the transmission power of the outgoing signal exceeds the predetermined threshold value for a predetermined period of time, while fixing transmission power of the outgoing signal to a predetermined amount of power.
